**Europäisches Patentamt**

**European Patent Office**

**Office européen des brevets**

(19)

(11) Veröffentlichungsnummer : **0 355 300 B1**

(12)

# EUROPÄISCHE PATENTSCHRIFT

(45) Veröffentlichungstag der Patentschrift :
**13.01.93 Patentblatt 93/02**

(51) Int. Cl.⁵ : **G01P 5/00**

(21) Anmeldenummer : **89111033.0**

(22) Anmeldetag : **18.06.89**

(54) Verfahren zur Bestimmung des Vorzeichens der Richtung einer Teilchenströmung.

(30) Priorität : **18.06.88 DE 3820654**

(43) Veröffentlichungstag der Anmeldung :
**28.02.90 Patentblatt 90/09**

(45) Bekanntmachung des Hinweises auf die
Patenterteilung :
**13.01.93 Patentblatt 93/02**

(84) Benannte Vertragsstaaten :
**DE FR GB**

(56) Entgegenhaltungen :
**GB-A- 1 554 561
US-A- 3 984 685
US-A- 4 201 468
APPLIED PHYSICS LETTERS, Band 16, Nr. 11,
1. Juni 1970, Seiten 462-464, New York, US;
M.K. MAZUMDER: "Laser doppler velocitymeasurement without directional ambiguity by
using frequency shifted incident beams"**

(73) Patentinhaber : **Deutsche Forschungsanstalt
für Luft- und Raumfahrt
Linder Höhe Postfach 90 60 58
W-5000 Köln 90 (DE)**

(72) Erfinder : **Hausamann, Dieter, Dr. Dipl.-Phys.
Ludwig-Thoma-Strasse 4a
W-8031 Gilching (DE)**
Erfinder : **Davis, Brian W., Dr.
Riccarton Currie
Edinburgh EH14 4AP (GB)**

(74) Vertreter : **von Kirschbaum, Albrecht, Dipl.-Ing.
Hermann-Ehlers-Strasse 21a
W-8034 Germering (DE)**

EP 0 355 300 B1

EP 0 355 300 B1

## Beschreibung

Die Erfindung betrifft ein Verfahren zur Bestimmung des Vorzeichens der Richtung einer Teilchenströmung nach dem ersten Teil des Anspruchs 1 und die Verwendung einer Vorrichtung zur Durchführung des Verfahrens.

Vorrichtungen zur Durchführung solcher Verfahren werden unter dem Begriff Laser-Doppler Anemometer (welche nachstehend der Einfachheit halber oft als LD-Anemometer bezeichnet werden) zusammengefaßt, welche nach zwei grundsätzlich verschiedenen Verfahren zur Bestimmung der Geschwindigkeit von Teilchenströmen arbeiten.

a. Bei einem Einstrahl-LD-Anemometer (welche auch als Heterodyn- bzw. Homodyn- oder Referenzstrahl-LD-Anemometer bezeichnet werden) wird zur Geschwindigkeitsbestimmung die Dopplerverschiebung einer gestreuten Lichtwelle ausgenutzt. Die Strahlung einer kohärenten Lichtquelle wird auf das Meßvolumen gerichtet, und das vom Teilchenstrom gestreute Licht wird doppler-verschoben. Die doppler-verschobene Streuwelle wird auf einem Detektor einem ungestreuten, kohärenten Lichtstrahl überlagert; das bei diesem Überlagerungsvorgang entstehende, elektrische Signal weist die Differenzfrequenz zwischen gestreuter und ungestreuter Lichtwelle auf.

Besitzt die Referenzstrahlung die gleiche Frequenz wie die auf das Meßvolumen gerichtete Strahlung, so ist die Differenzfrequenz auf dem Detektor gleich dem Betrag der Dopplerverschiebung; dies wird dann als homodynes LD-Anemometer bezeichnet.

Wird die Frequenz der Referenzstrahlung gegenüber der Frequenz der auf das Meßvolumen gerichteten Strahlung verschoben, so handelt es sich um ein Heterodyn-LD-Anemometer. Um das Vorzeichen des Geschwindigkeitsvektors in einem Meßvorgang bestimmen zu können, muß die Frequenzverschiebung des Referenzstrahls vom Betrag her größer oder zumindest gleich sein als bzw. wie die Dopplerverschiebung der gestreuten Welle. Diese Voraussetzung ist bei allen bisher bekannten Heterodyn-LD-Anemometern gegeben.

b. Im Gegensatz zum Einstrahl-LD-Anemometer wird beim Zweistrahl-, Kreuzstrahl- oder dem sogenannten Crossed-Beam-Verfahren die Strahlung zweier kohärenter Lichtquellen im Meßvolumen unter einem definierten Winkel gekreuzt, wodurch sich im Meßvolumen ein Interferenzmuster ausbildet. Ein sich durch dieses Interferenzmuster bewegendes Teilchen erzeugt eine periodische Veränderung des gestreuten Lichts; dies erscheint in den Interferenzmaxima hell und in den Minima dunkel.

LD-Anemometer lassen sich aufgrund der Verschiedenheit der vorstehend unter a. und b. skizzierten Meßverfahren stets eindeutig Ein- oder Zweistrahl-Systemen zuordnen. Folglich handelt es sich bei dem vorliegenden Verfahren um ein Einstrahl-System in Form eines Heterodyn- oder Referenzstrahl-LD-Verfahren, wie dem Oberbegriff des Hauptanspruchs eindeutig zu entnehmen ist.

Bei Laser-Doppler-Verfahren wird somit aus einer Dopplerverschiebung einer an einem bewegten Objekt gestreuten Lichtwelle die Geschwindigkeit des streuenden Objekts bestimmt. Mit gebräuchlichen Homodyn-Verfahren läßt sich jedoch nur der Betrag der Geschwindigkeitskomponente in Beobachtungsrichtung messen. Das Vorzeichen dieser Geschwindigkeitskomponente ist nur mit Hilfe von Heterodyn-Verfahren zu ermitteln, wie nachstehend im einzelnen dargelegt wird.

Eine kohärente Überlagerung einer Lichtwelle mit einer Frequenz $f_g$ mit einer ungestreuten Lichtwelle mit einer Frequenz $f_r$ auf einem photoelektrischen Element erzeugt ein Strom- bzw. Spannungssignal mit einer Frequenz $\Delta f_m$, deren Größe gleich dem Betrag der Differenzfrequenz der Frequenzen $f_g$ und $f_r$ der beiden Lichtwellen ist:

$$\Delta f_m = \left| f_g - f_r \right| \quad (1)$$

Wird beiden Lichtwellen die gleiche kohärente Lichtquelle der Frequenz $f_o$ zugrundegelegt, so wird nur die durch einen Streuvorgang verursachte Frequenzänderung $\Delta f_D$ (Dopplerverschiebung) relevant, so daß sich für die Frequenzen $f_r$ und $f_g$ der ungestreuten und der gestreuten Lichtwellen und folglich für die Differenzfrequenz $\Delta f_m$ ergibt:

$$f_r = f_o \quad (2)$$
$$f_g = f_o + \Delta f_D \quad (3)$$
$$\Delta f_m = \left| f_r - f_g \right| = \left| \Delta f_D \right| \quad (4)$$

In diesem homodynen Fall ist die gemessene Differenzfrequenz $\Delta f_m$ gleich dem Betrag der Dopplerverschiebung $\Delta f_D$.

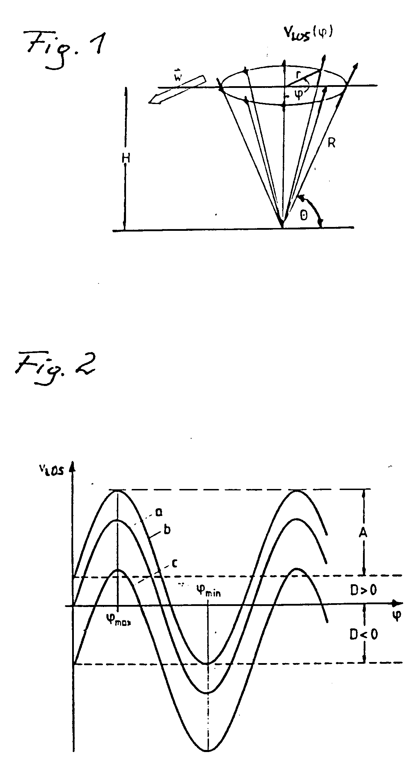

Das Homodyn-LD-Verfahren ist eine aktive Meßmethode beispielsweise zur Bestimmung der Windrichtung; als Strahlungsquelle dient hierbei ein Dauerstrich-Laser, dessen Leistung über ein Teleskop auf ein Meßvolumen im Abstand R fokussiert wird. (Fig.1). Ferner ist in Fig.1 noch ein Windvektor $\vec{w}$ dargestellt, wobei

2

in Fig.1 der Azimutwinkel $\varphi$ = O gewählt ist, d.h. der Windvektor $\vec{w}$ liegt in der Zeichenebene.

Ein Teil der Strahlung wird an Aerosolpartikeln, die sich mit der Geschwindigkeit einer Luftströmung durch das Meßvolumen bewegen, zurückgestreut. Dabei erfährt die gestreute Strahlung aufgrund einer Dopplerverschiebung eine Frequenzänderung $\Delta f_D$ von

$$\Delta f_D = 2 \cdot \frac{V_{LOS}}{c} \cdot f_O \quad (5)$$

wobei $f_O$ die Frequenz des Lasers, c die Lichtgeschwindigkeit und $V_{LOS}$ die Komponente der Windgeschwindigkeit in Meßrichtung, d.h. die Radial- oder Line-of-Sight-Komponente, ist.

Ein Signal (in Form des zurückgestreuten Lichts) mit einer Frequenz $(f_o + \Delta f_D)$ und ein Teil des emittierten Laserlichtes als Referenzsignal mit der Referenz $f_o$ werden einem Detektor überlagert (Überlagerungsempfang) und erzeugen dort ein elektrisches Signal, dessen Wechselstromanteil die Differenzfrequenz $\Delta f_m$ zwischen Referenz- und Signalstrahl enthält.

Zur Ermittlung von Windgeschwindigkeit und Windrichtung wird das Verfahren eines sogenannten konischen Scans angewendet; hierbei wird der Abtaststrahl unter einem festen Elevationswinkel $\theta$ gegenüber der Veritkalen um die Vertikale als Achse um einen Azimutwinkel $\varphi$ gedreht. Ein Windfeld wird somit in einer Höhe H auf dem Basiskreis eines Beobachtungskegels mit dem Radius r länge eines Kegelmantels im Abstand R abgetastet (siehe Fig.1).

In einem homogenen Windfeld ergibt sich für die beobachtbare Windkomponente $V_{LOS}$ in Abhängigkeit von dem Azimutwinkel $\varphi$ eine verschobene Sinusfunktion (Fig.2):

$$V_{LOS}(\varphi) = A \sin(\varphi + \varphi_O) + D \quad (6)$$

mit einer Amplitude A, einer Verschiebung D und einer Anfangsphase $\varphi_O$. Für die Windkomponente $V_{LOS}$ in Beobachtungsrichtung ergibt sich in Abhängigkeit vom Azimutwinkel $\varphi$

a) bei Fehlen einer vertikalen Windkomponente keine Verschiebung, d.h. D=O

b) bei einer vertikalen Windkomponente von unten eine Verschiebung D > O und

c) bei einer vertikalen Windkomponente nach oben eine Verschiebung D < O.

Aus dem Verlauf dieser Funktion lassen sich alle Größen eines Windfeldes bestimmen, und zwar die horizontale Windgeschwindigkeit aus

$$W_{\parallel} = \frac{D}{\cos \theta} \quad (7a)$$

und die vertikale Windgeschwindigkeit aus

$$W_{\perp} = \frac{A}{\sin \theta} \quad (7b)$$

Hierbei ist mit $\varphi_{min}$ die Windrichtung angezeigt (d.h. der Windvektor zeigt in Richtung $\varphi_{min}$). Die Größe $\varphi_O$ legt die Orientierung der Meßachse relativ zur absoluten geographischen Richtung fest. Da die Meßachse beliebig orientiert werden kann, ist im folgenden, wie auch schon in Fig.1 und 2, $\varphi_O$ = O gesetzt.

Wie vorstehend insbesondere in Verbindung mit G1. (3) und (4) ausgeführt, wird beim Homodyn-Verfahren der Betrag der Frequenzverschiebung $\Delta f_D$ aufgrund des Dopplereffekts gemessen. Die Meßgröße ist eine (positive) Frequenz und ergibt sich zu:

$$\Delta f_m = |\Delta f_D| \sim |V_{LOS}| \quad (8)$$

Für das beschriebene, bekannte Verfahren des sogenannten konischen Scans ergibt sich dann:

$$\Delta f_m(\varphi) = |A' \cdot \sin\varphi + D'| \quad (9)$$

mit

$$A' = 2 \cdot \frac{f_O}{c} \cdot A \text{ und } D' = \frac{f_O}{c} \cdot D$$

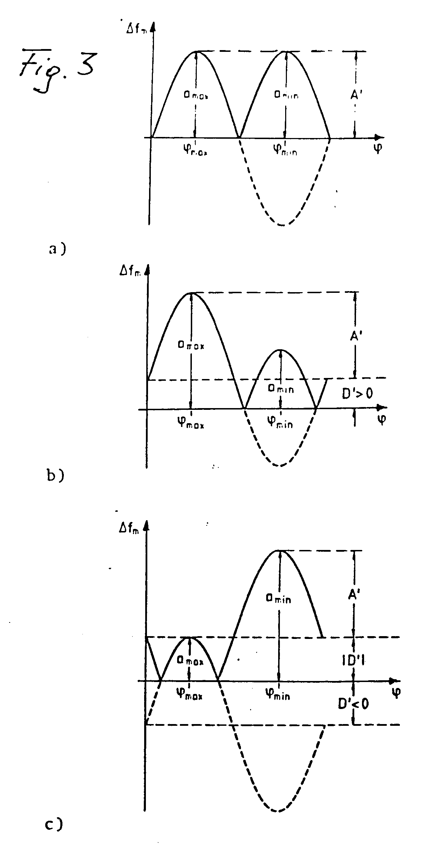

Es wird also der Betrag einer verschobenen Sinusfunktion gemessen. Sie ist in Fig.3 im einzelnen für die vorstehend bereits angegebenen Fälle skizziert, nämlich

a) D = O (kein Vertikalwind); Fig.3a

b) D > O (Vertikalwind nach unten); Fig.3b

c) D< O (Vertikalwind nach oben); Fig.3c

Wie hieraus eindeutig zu erkennen ist, ist eine Unterscheidung des absoluten Minimums und Maximums der Funktion prinzipiell nicht mehr möglich. Die Windrichtung kann also nur auf ±180° genau ermittelt werden; das heißt aber, bei Homodyn-Verfahren ist die Bestimmung des Vorzeichens der horizontalen Windkomponente nicht möglich; aus denselben Gründen ist auch eine Ermittlung des Vorzeichens der vertikalen Windrichtung ausgeschlossen.

Die Richtungszweideutigkeit beim Homodyn-Verfahren läßt sich durch eine zusätzliche (positive) Frequenzverschiebung $\Delta f_s$ zwischen Signal- und Referenzstrahl beseitigen. Dieser Grundgedanke bekannter Heterodyn-Methoden zur Vorzeichenbestimmung ist beispielsweise folgenden Druckschriften entnehmbar:

GB-PS 1 554 561 (1975), US-PS 3 428 816 (1969), DE-PS 34 40 376 oder DE-OS 37 13 229.

Wird bei einer Referenzlichtwelle ein andere Frequenz $f_1$ als die Frequenz $f_o$ der Lichtwelle vor dem Streuvorgang gewählt, so gilt:

$$f_r = f_o + \Delta f_s = f_1 \quad (10)$$
$$f_g = f_o + \Delta f_D \quad (11)$$

wobei der Unterschied der Frequenzen $f_o$ und $f_1$ durch $\Delta f_s$ ausgedrückt wird. Die Referenzfrequenz $f_1$ läßt sich dabei durch eine Frequenzverschiebung $\Delta f_s$ aus der Frequenz $f_o$ erzeugen. In diesem heterodynen Fall ergibt sich dann für die gemessene Differenzfrequenz:

$$\Delta f_m = \left| f_r - f_g \right| = \left| \Delta f_s - \Delta f_D \right| \quad (12)$$

Mit der für herkömmliche heterodyne Systeme üblichen Forderung, daß die Frequenzverschiebung $\Delta f_s$ der ungestreuten Strahlung vom Betrag her größer oder gleich dem Betrag der Doppelverschiebung $\Delta f_D$ sein muß, ergibt sich die Vorzeichenbestimmung von $\Delta f_D$ aus einer Messung von $\Delta f_m$. Es können dann folgende Fälle unterschieden werden:

Fall a) $\Delta f_s > 0$

In diesem Fall können die Betragstriche weggelassen werden, und ergibt sich für die Differenzfrequenz $\Delta f_m$:

$$\Delta f_m = \Delta f_s - \Delta f_D \begin{cases} = \left| \Delta f_s \right| & \text{für } \Delta f_D = 0 \\ > \left| \Delta f_s \right| & \text{für } \Delta f_D < 0 \\ < \left| \Delta f_s \right| & \text{für } \Delta f_D > 0 \end{cases} \quad (13)$$

Fall b) $\Delta f_s < 0$:

In diesem Fall kehren sich beim Weglassen der Betragstriche die Vorzeichen um und es ergibt sich wiederum für die Differenzfrequenz $\Delta f_m$:

$$\Delta f_m = - \Delta f_s + \Delta f_D \begin{cases} = \left| \Delta f_s \right| & \text{für } \Delta f_D = 0 \\ > \left| \Delta f_s \right| & \text{für } \Delta f_D > 0 \\ < \left| \Delta f_s \right| & \text{für } \Delta f_D < 0 \end{cases} \quad (14)$$

In beiden Fällen wird die Frequenzverschiebung $\Delta f_m$ des gemessenen Signals bezogen auf die bekannte Frequenzverschiebung des Referenzstrahls $\left| \Delta f_s \right|$ betrachtet:

Ist die gemessene Frequenzverschiebung $\Delta f_m$ größer als $\left| \Delta f_s \right|$, so ist das Vorzeichen der Dopplerverschiebung $\Delta f_D$

im Fall a), (d.h. für $\Delta f_s > 0$) negativ und
im Fall b), (d.h. für $\Delta f_s < 0$) positiv.

Ist die Differenzfrequenz $\Delta f_m$ kleiner als der Betrag der Differenzverschiebung $\left| \Delta f_s \right|$, so ist das Vorzeichen der Dopplerverschiebung $\Delta f_D$

im Fall a), (d.h. für $\Delta f_s > 0$) positiv und
im Fall b), (d.h. für $\Delta f_s < 0$) negativ.

Für die Bestimmung des Vorzeichens der Dopplerverschiebung genügt also ein Meßvorgang, vorausgesetzt, der Betrag der Frequenzverschiebung $\Delta f_s$ der Referenzstrahlung ist größer oder gleich dem Betrag der Dopplerverschiebung $\Delta f_D$.

Der Vorteil in einem einzigen Meßvorgang das Vorzeichen der Dopplerverschiebung $\Delta f_D$ zu ermitteln, wird jedoch i.a. weitgehend durch schwerwiegende technische Probleme bei der Erzeugung einer hinreichend großen Frequenzverschiebung $\Delta f_s$ aufgewogen.

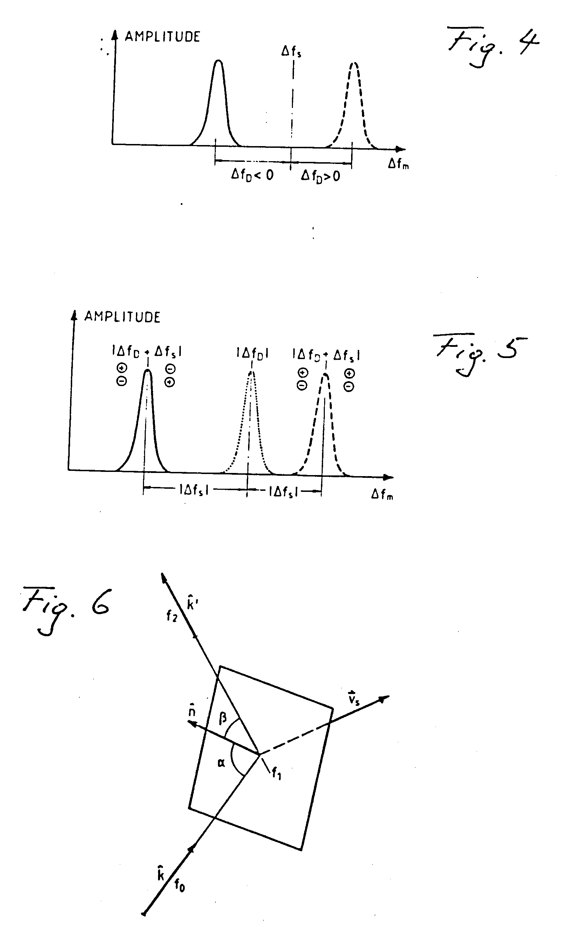

Bei allen bisher bekanntgewordenen Heterodyn-Verfahren zur Vorzeichenbestimmung muß die Frequenzverschiebung $\Delta f_s$ groß gegenüber der zu messenden Dopplerverschiebung $\Delta f_D$ sein, d.h. $\Delta f_s \gg \Delta f_D$. Wie aus Fig.4 ersichtlich, kann dann relativ zur Frequenzverschiebung $\Delta f_s$ das Vorzeichen der Dopplerverschiebung ($\Delta f_D$) und damit das Vorzeichen des Windvektors ermittelt werden.

Die Anwendbarkeit bekannter Heterodyn-Methoden ist jedoch vor allem aufgrund des hohen technischen Aufwandes, wie schwer justierbare, empfindliche zusätzliche optische Komponenten, zusätzliche Laser usw. stark eingeschränkt bzw. die bekannten Heterodynverfahren werden in der Praxis kaum angewandt. Nur bei flugzeuggetragenen Systemen, bei denen durch die Eigenbewegung eine große zusätzliche Dopplerverschiebung von vorneherein gegeben ist, hat die Heterodyn-Methode eine verbreitete Anwendung gefunden.

Aus GB A1 554 561 ist ein Heterodyn-Meßverfahren zur Bestimmung des Vorzeichens der Richtung eines Meßkörpers bekannt. Hierzu wird ein Laserstrahl mittels einer Optik auf das Meßobjekt gerichtet. Durch Überlagerungsempfang wird der Frequenzunterschied zwischen einem durch eine zusätzlich aufgeprägte Frequenzverschiebung modulierten Referenzstrahl und dem zurückgestreuten Licht (Dopplerfrequenz) ermittelt. Bei diesem Heterodyn-Meßverfahren ist die zusätzlich aufgeprägte Frequenzverschiebung zeitlich veränderlich und kleiner als die erwartete Dopplerverschiebung. Ferner wird der zu messende Frequenzunterschied (d.h. die Dopplerfrequenz) an mindestens zwei Zeitpunkten gemessen, an welchen die Frequenzverschiebungen unterschiedliche Größen aufweisen. Ferner wird die Frequenzverschiebung an einem genau festgelegten Bereich des Strahlungsverlaufs, nämlich an einem Referenzstrahl aufgebracht. Zusätzlich erfolgt ein Vergleich der auf dem Detektor entstehenden Frequenzen zur Ermittlung des Vorzeichens der Richtung des Meßobjekts, indem ein Vergleich des Sensorsignals mit der aufgeprägten Frequenzverschiebung durchgeführt wird. Dieses bekannte Heterodyn-Meßverfahren eignet sich jedoch in dieser Form nur zur Bestimmung des Vorzeichens der Richtung eines Meßobjekts.

Bei dem aus US-A 3 984 685 bekannten Verfahren zum Fernmessen von vertikalen und horizontalen Windkomponenten ist wieder auf die bekannte Voraussetzung $\Delta f_s > \Delta f_D$ in Verbinddung mit dem Meßverfahren eines sogenannten konischen Scans Bezug genommen.

Aufgabe der Erfindung ist es daher, ein Verfahren und eine Vorrichtung zum Bestimmen des Vorzeichens der Richtung einer Teilchenströmung zu schaffen, indem ein homodynes System auf einfache Weise in ein heterodynes System erweitert wird, ohne daß die mit technischen Schwierigkeiten behafteten, zusätzlichen Frequenzverschiebungen notwendig sind.

Erfindungsgemäß ist dies bei einem Verfahren zur Bestimmung des Vorzeichens der Richtung einer Teilchenströmung nach dem Anspruch 1 erreicht. Vorteilhafte Weiterbildungen sind Gegenstand der einzelnen, auf die vorstehenden Ansprüche rückbezogenen abhängigen Ansprüche.

Bei dem erfindungsgemäßen Verfahren sind die Voraussetzungen und damit die Bedingungen und Betrachungsweisen der üblichen Heterodyn-Verfahren umgekehrt. Gemäß der Erfindung ist nämlich eine zusätzliche Frequenzverschiebung gefordert, welche vom Betrag her stets kleiner sein muß als der Betrag der Dopplerverschiebung. Die Frequenzänderung des gemessenen Signals wird dann bezogen auf eine (unbekannte) Frequenzänderung $\Delta f_D$ des gestreuten Signals.

Ferner sind zur Vorzeichenbestimmung jedoch mindestens zwei Meßvorgänge bei verschiedenen Frequenzverschiebungen $\Delta f_s$ erforderlich, d.h. die Frequenzverschiebung $\Delta f_s$ muß zeitlich veränderbar sein.

Erst durch den Vergleich von mindestens zwei Meßvorgängen zu verschiedenen Zeitpunkten mit unterschiedlichen Frequenzverschiebungen $\Delta f_s(t_1)$ und $\Delta f_s(t_2)$ läßt sich das Vorzeichen der durch eine Frequenzverschiebung bedingten Frequenzänderung $\Delta f_D$ ermitteln.

Hierbei sind die nachstehend aufgeführten Fälle a) und b) zu unterscheiden, nämlich

Fall a) für $\Delta f_s$ O ergibt sich für die Differenz-Frequenz $\Delta f_m$:

$$\Delta f_m = |\Delta f_s - \Delta f_D| \begin{cases} > |\Delta f_D| & \text{für } \Delta f_D < 0 \quad \text{Fall}[1] \\ < |\Delta f_D| & \text{für } \Delta f_D > 0 \quad \text{Fall}[2] \end{cases} \quad (15)$$

Fall b) für $\Delta f_s < $ O ergibt sich für die Differenz-Frequenz $\Delta f_m$:

$$\Delta f_m = |\Delta f_s - \Delta f_D| \begin{cases} > |\Delta f_D| & \text{für } \Delta f_D > 0 \quad \text{Fall}[3] \\ < |\Delta f_D| & \text{für } \Delta f_D < 0 \quad \text{Fall}[4] \end{cases} \quad (16)$$

Da Betrag und Vorzeichen der Frequenzänderung in Form einer Dopplerverschiebung $\Delta f_D$ nicht bekannt sind, genügt nicht eine einzige Messung. Selbst wenn Vorzeichen und Betrag der zusätzlichen Frequenzverschiebung $\Delta f_s$ bekannt sind, läßt sich aus einer Messung der Differenzfrequenz $\Delta f_m$ nicht ermitteln, ob die Meßgröße, d.h. die Differenz-Frequenz $\Delta f_m$ größer (Fälle [1] und [3]) oder kleiner (Fälle [2] und [4]) als der Betrag des zu bestimmenden Dopplersignals ist. Erst eine Messung bei mindestens zwei verschiedenen Frequenzverschiebungen legt das Vorzeichen der Dopplerverschiebung eindeutig fest.

Hierbei bestehen folgende Möglichkeiten für eine Vorzeichenbestimmung, indem zwei Messungen durchgeführt werden, nämlich

eine 1. Messung

$$\Delta f_m^{(1)} = \left| \Delta f_s(t_1) - \Delta f_D \right| \quad (17)$$

und

eine 2. Messung

$$\Delta f_m^{(2)} = \left| \Delta f_s(t_2) - \Delta f_D \right| \quad (18)$$

a. Bei $\Delta f_s(t_1) = O$ ergibt sich keine zusätzliche Frequenzverschiebung. Die gemessene Frequenz $\Delta f_m^{(1)} = \left| \Delta f_D \right|$ ergibt den Betrag der Dopplerverschiebung.

1) Für $\Delta f_s(t_2) > O$ wird die gemessene Frequenz

$$\Delta f_m^{(2)} = \left| \Delta f_s(t_2) - \Delta f_D \right|. \quad (19)$$

Ist

$$\Delta f_m^{(2)} < \Delta f_m^{(1)} = \left| \Delta f_D \right| \quad (20)$$

so folgt für die Dopplerverschiebung $\Delta f_D$:

$\Delta f_D > O$, was dem Fall [2] entspricht.

Ist jedoch

$$\Delta f_m^{(2)} > \Delta f_m^{(1)} = \left| \Delta f_D \right| \quad (21)$$

so folgt hieraus für die Dopplerverschiebung $\Delta f_D$:

$\Delta f_D < O$, was dem Fall [1] entspricht.

2) Bei $\Delta f_s(t_2) < O$ wird die gemessene Frequenz

$$\Delta f_m^{(2)} = \left| \Delta f_s(t_2) - \Delta f_D \right|; \quad (22)$$

hieraus ergibt sich:

$$\Delta f_m^{(2)} > \Delta f_m^{(1)} = \left| \Delta f_D \right|; \quad (23)$$

hieraus folgt für die Dopplerverschiebung $\Delta f_D$:

$\Delta f_D > O$, was dem Fall [3] entspricht.

Ist jedoch

$$\Delta f_m^{(2)} < \Delta f_m^{(1)} = \left| \Delta f_D \right|, \quad (24)$$

so folgt hieraus für die Dopplerverschiebung $\Delta f_D$:

$\Delta f_D < O$, was dem Fall [4] entspricht.

b. Bei $\Delta f_s(t_2) < \Delta f_s(t_1)$, d.h. bei einer Abnahme von $\Delta f_s$, ergibt sich für die beiden Frequenzen $\Delta f_m^{(1)}$ und $\Delta f_m^{(2)}$ :

$$\Delta f_m^{(1)} = \left| \Delta f_s(t_1) - \Delta f_D \right| \quad (25)$$
$$\Delta f_m^{(2)} = \left| \Delta f_s(t_2) - \Delta f_D \right| \quad (26)$$

1) Ist $\Delta f_m^{(2)} > \Delta f_m^{(1)}$, was einer Zunahme von $\Delta f_m$ entspricht, so folgt hieraus für die Dopplerverschiebung $\Delta f_D$:

$\Delta f_D > O$, was den Fällen [2] und [4] entspricht.

2) Ist $\Delta f_m^{(2)} < \Delta f_m^{(1)}$, was einer Abnahme von $\Delta f_m$ entspricht, so folgt für die Dopplerverschiebung $\Delta f_D$:

$\Delta f_D < O$; was den Fällen [1] und [3] entspricht.

c. Bei $\Delta f_s(t_2) > \Delta f_s(t_1)$, d.h. bei einer Zunahme von $\Delta f_s$, ergibt sich:

1) Bei $\Delta f_m^{(2)} > \Delta f_m^{(1)}$, d.h. bei einer Zunahme von $\Delta f_m$, folgt hieraus für die Dopplerverschiebung $\Delta f_D$:

$\Delta f_D < O$, was den Fällen [1] und [3] entspricht.

2) Bei $\Delta f_m^{(2)} < \Delta f_m^{(1)}$, d.h. bei einer Abnahme von $\Delta f_m$ folgt für die Frequenzverschiebung $\Delta f_D$:

$\Delta f_D > O$, was den Fällen [2] und [4] entspricht.

Bei den vorstehend unter a. abgehandelten Verfahren wird die Messung ohne eine zusätzliche Frequenzverschiebung $\Delta f_s$ als erster Meßpunkt benutzt und die Veränderung der gemessenen Frequenz $\Delta f_m$ bei positiv bzw. negativer Frequenzverschiebung $\Delta f_s$ wird betrachtet.

Die vorstehend unter b. und c. abgehandelten Verfahren beschreiben den allgemeinen Fall, wie durch zwei Messungen der Frequenz $\Delta f_m$ bei zunehmender bzw. abnehmender Frequenz der zusätzlichen Frequenzverschiebung $\Delta f_s$ das Vorzeichen der Frequenzänderung bzw. der Dopplerverschiebung $\Delta f_D$ ermittelt wird. Hierin ist auch der Fall enthalten, bei welchem die Veränderungen von $\Delta f_s$ in einer Veränderung des Vorzeichens von $\Delta f_s$ besteht. Ebenso ist das Verfahren nach 1) in den allgemeinen Fällen enthalten:

Fall a.1) entspricht dem Fall c. mit $\Delta f_s(t_1) = O$, und

Fall a.2) entspricht dem Fall b. mit $\Delta f_s(t_2) = O$.

Nachfolgend wird die Erfindung anhand von bevorzugten Ausführungsformen unter Bezugnahme auf die anliegenden Zeichnungen im einzelnen erläutert. Es zeigen:

Fig. 1 eine prinzipielle Darstellung des konischen Scans zur Abtastung eines Windfeldes in einer bestimmten Höhe;

Fig.2 eine verschobene Sinusfunktion als funktionaler Zusammenhang einer beobachtbaren Windkomponente ($V_{LOS}$) in Abhängigkeit vom Azimutwinkel ($\varphi$) bei verschiedenen Verschiebungen (D) aufgrund von vertikalen Windkomponenten;

Fig.3 eine Frequenzverschiebung ($\Delta f_m$) in Abhängigkeit vom Azimutwinkel ($\varphi$) für verschiedene Verschiebungen (D');

Fig.4 eine prinzipielle Darstellung eines bekannten Heterodyn-Verfahrens mit einer Dopplerverschiebung relativ zu einer großen zusätzlichen Frequenzverschiebung ($\Delta f_s$);

Fig.5 eine prinzipielle Darstellung des erfindungsgemäßen Verfahrens;

Fig.6 eine prinzipielle Darstellung einer Reflexion eines Lichtstrahls an einem bewegten Spiegel;

Fig.7 eine schematische Darstellung der Reflexion eines Lichtstrahls an einem Retroreflektor;

Fig.8 eine schematische Darstellung einer Ausführungsform einer Vorrichtung zur Durchführung des Verfahrens;

Fig.9 eine prinzipielle Darstellung einer Ausführungsform der Vorrichtung in Form einer Rotationsanordnung; und

Fig.10 eine prinzipielle Darstellung des Einflusses einer Spiegelrotation auf die Frequenzverschiebung ($\Delta f_m$).

Ausgegangen wird bei dem erfindungsgemäßen Verfahren zur Bestimmung des Vorzeichens der Richtung einer Teilchenströmung auch wieder von einer zusätzlichen Frequenzverschiebung $\Delta f_s$ zwischen einem Signal- und einem Referenzstrahl. Im Gegensatz zu den bisher bekannten und angewendeten Methoden ist jedoch die Frequenzverschiebung $\Delta f_s$ klein gegenüber einer Dopplerverschiebung $\Delta f_D$, und das Vorzeichen der Frequenzverschiebung $\Delta f_s$ ist nicht notwendigerweise positiv.

Wird nun einer Dopplerverschiebung $\Delta f_D$ die zusätzliche Frequenzverschiebung $\Delta f_s$ aufgeprägt, so verschiebt sich, wie aus Fig.5 zu ersehen ist, die gemessene Signalfrequenz

> zu höheren Frequenzen, wenn beide Frequenzverschiebungen dasselbe Vorzeichen besitzen bzw.
>
> zu niedrigeren Frequenzen, wenn beide Frequenzverschiebungen unterschiedliches Vorzeichen besitzen.

Eine zusätzliche Frequenzverschiebung wird durch einen bewegten im Referenz- oder Signalstrahl angeordneten Spiegel erzeugt; eine auf einen bewegten Spiegel fallende Lichtwelle wird stets dopplerverschoben.

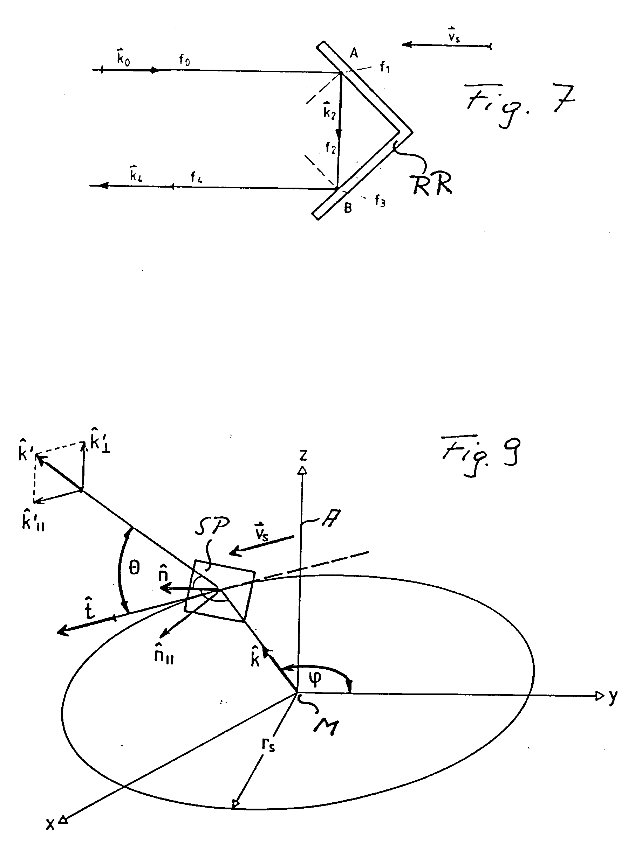

Wird nun der Spiegel (mit einem Oberflächen-Normalenvektor $\hat{n}$) mit einer Geschwindigkeit $\vec{v}_s$ ($v_s \ll c$) bewegt, so wird, wie in Fig.6 prinzipiell dargestellt ist, ein in Richtung $\hat{k}$ auftreffender Lichtstrahl der Frequenz $f_0$ nach dem Reflexionsgesetz (Einfallswinkel $\alpha$ = Ausfallwinkel $\beta$ ) in die Richtung $\hat{k}'$ emittiert und folgendermaßen frequenzverschoben:

Im Ruhesystem des Spiegels hat die einfallende Lichtwelle die Frequenz $f_1$, nämlich

$$f_1 = f_0 \left(1 - \frac{\hat{k} \cdot \vec{v}_s}{c}\right) \qquad (27a)$$

wobei $\hat{k}$ die Einfallsrichtung des Lichtstrahls der Frequenz $f_0$, $\hat{k}'$ die Ausfallsrichtung des Lichtstrahls der Frequenz $f_2$, $\hat{n}$ der Normalvektor auf der Spiegeloberfläche, $\vec{v}_s$ der Geschwindigkeitsvektor der Spiegelbewegung und $f_1$ die Frequenz im Ruhesystem des Spiegels ist.

Der ruhende Beobachter sieht eine vom Spiegel ausfallende Lichtwelle der Frequenz $f_2$ als

$$f_2 = f_1 \left(1 + \frac{\hat{k}' \cdot \vec{v}_s}{c}\right) \qquad (27b)$$

Insgesamt ist dann der ausfallende Strahl gegenüber dem einfallenden Strahl um

$$\Delta f_s = f_2 - f_0 \qquad f_0 \cdot \frac{1}{c} \cdot (\hat{k}' - \hat{k}) \cdot \vec{v}_s \qquad (28)$$

frequenzverschoben.

Bei bekannter Bewegungsrichtung des Spiegels liegt dann das Vorzeichen der Frequenzverschiebung $\Delta f_s$ fest. Eine Änderung der Bewegungsrichtung, also des Vorzeichens der Frequenzverschiebung $\Delta f_s$ gegenüber der Dopplerverschiebung $\Delta f_D$ führt bei der im Überlagerungsempfang gemessenen Signalfrequenz $\Delta f_m$ zu einer Frequenzverschiebung zu höheren bzw. niedrigeren Frequenzen. Daraus läßt sich eindeutig das Vorzeichen der Windrichtung bestimmen, wie aus der nachstehend wiedergegebenen Tabelle zu entnehmen ist.

<u>Tabelle</u>

| Vorzeichen von $\Delta f_s$ | Vorzeichen der Verschiebung von $\Delta f_m = \|\Delta f_D - \Delta f_s\|$ | Vorzeichen von $\Delta f_D$ = Vorzeichen der Windrichtung | Fall |
|:---:|:---:|:---:|:---:|
| + | + | − | [1] |
| + | − | + | [2] |
| − | + | + | [3] |
| − | − | − | [4] |

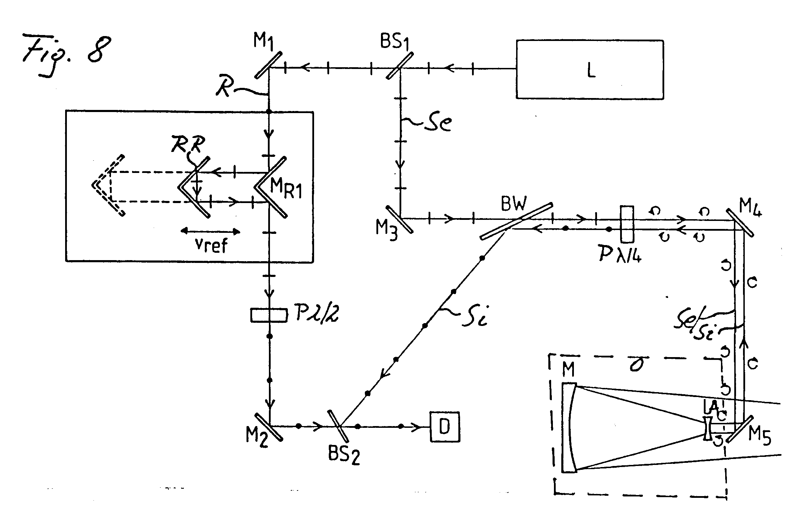

Eine Frequenzverschiebung $\Delta f_s$ kann beispielsweise durch Reflexion eines Lichtstrahls an einem in gleicher Richtung bewegten, ebenen Retroreflektor RR bewirkt werden (Fig.7). Die gesamte Frequenzverschiebung $\Delta f_s$ beträgt dann nach Gl.(28):

$$\Delta f_s = f_4 - f_0 = 2 \cdot f_0 \frac{v_s}{c} \quad (29)$$

wobei am Retroreflektor RR in einem Punkt A nur beim Einfall und in einem Punkt B nur beim Ausfall des Strahls eine Dopplerverschiebung auftritt. Bei einem im Punkt A ausfallenden und im Punkt B einfallenden Strahl findet

wegen $\vec{k}_s \cdot \vec{v}_s = 0$ keine Dopplerverschiebung statt. Hierbei bedeuten in Fig.7

$$\vec{k}_0, \ \vec{k}_2, \ \vec{k}_4,$$

die jeweilige Richtung des Lichtstrahls, $\vec{v}_s$ den Geschwindigkeitsvektor der Spiegelbewegung, $f_0$ die Ausgangsfrequenz, $f_1$, $f_3$ die Frequenzen im Ruhesystem des Spiegels, $f_2$ die Frequenz nach der Reflexion am Punkt A (wobei gilt $f_1 = f_2 = f_3$), und $f_4$ die Frequenz nach der Reflexion im Punkt B.

Das Vorzeichen des Windvektors wird dann dadurch ermittelt, daß der Retroreflektor RR in eine Hin- und Herbewegung versetzt wird, und die Verschiebung der beobachteten Frequenz $\Delta f_m$ zu größeren bzw. kleineren Werten in Abhängigkeit von der Bewegungsrichtung des als Spiegel wirkenden Retroreflektors festgestellt wird.

Hierbei kommen in einer für den Überlagerungsempfang üblichen Interferometeranordnung nämlich in einer Anordnung, wie sie in Fig.8 schematisch aufgezeigt ist, vier Möglichkeiten für einen Einsatz der Vorrichtung in Form eines in eine Hin- und Herbewegung versetzten Retroreflektors RR in Frage, nämlich die Anordnung der Vorrichtung

1. im Referenzstrahl (R);
2. im auslaufenden Sendestrahl (Se);
3. im einlaufenden Signalstrahl (Si) und
4. im Sende- und Signalstrahl (Se/Si), d.h. an einer Stelle, an welcher Sende- und Signalstrahl entgegengesetzt parallel übereinander verlaufen.

Hierbei besitzt die vierte Möglichkeit den Vorteil, daß sowohl der auslaufende Lichtstrahl als auch der zurücklaufende Signalstrahl eine Dopplerverschiebung in gleicher Richtung erfahren. Bei gleicher Geschwindigkeit $v_s$ des Retroreflektors RR bei dessen Hin- und Herbewegung kommt es in diesem Fall zu einer doppelten Frequenzverschiebung.

In Fig.8 ist eine Vorrichtung in Form des in Hin- und Herbewegung versetzbaren Retroreflektors RR im Referenzstrahl R angeordnet, dargestellt. (Siehe 1. in der vorstehenden Aufzählung). Alternativ hierzu kann die Vorrichtung in Form des in Hin- und Herbewegung versetzbaren Retroreflektors RR im Bereich des auslaufenden Sendestrahls Se (siehe 2.) oder im Bereich des einlaufenden Signalstrahls Si (siehe 3.) bzw. in einem Bereich (Se/Si; siehe 4.) vorgesehen sein, an welchem, wie vorstehend bereits ausgeführt, Sende- und Signalstrahl entgegengesetzt parallel übereinander verlaufen.

In Fig.8 sind in der Interferometeranordnung außer dem in Hin- und Herbewegung versetzbaren Retroreflektor RR vorgesehen eine Laserquelle L, eine Detektor D, ein Teleskop-Halbspiegel M mit zugeordneter Linsenanordnung LA, was nachstehend auch als optische Anordnung O bezeichnet wird, Strahlteiler $BS_1$ und $BS_2$, Umlenkspiegel $M_1$ bis $M_5$, ein Brewster-Fenster BW sowie Phasenschieber-Plättchen $P\lambda/2$ und $P\lambda/4$ für eine Phasenverschiebung von $\lambda/2$ bzw. $\lambda/4$. Ferner sind in Fig.8 die Polarisationen wie folgt gekennzeichnet: mit | die parallele Polarisation, mit ● die senkrechte Polarisation, mit ⌢ die rechtszirkulare Polarisation und mit ⌢ die linkszirkulare Polarisation.

Die verschiedenen Strahlenverläufe (R, Si, Se, Si/Se) sind durch mit Pfeilen versehene, ausgezogene Linien gekennzeichnet, wobei neben dem Strahlenverlauf auch noch die Polarisation in dem jeweiligen Abschnitt durch die verschiedenen, vorstehend erläuterten Symbole angegeben ist. Da die Differenzfrequenz zwischen Signal- und Referenzstrahl gemessen wird, nämlich $\Delta f_m = |f_{sig} - f_{ref}|$, muß bei der Verwendung der Anordnung nach Fig.8 wenn die Vorrichtung im Referenzstrahl R angeordnet ist, die Vorzeichenfolge für die Frequenzverschiebung $\Delta f_s$ in der Tabelle umgekehrt werden.

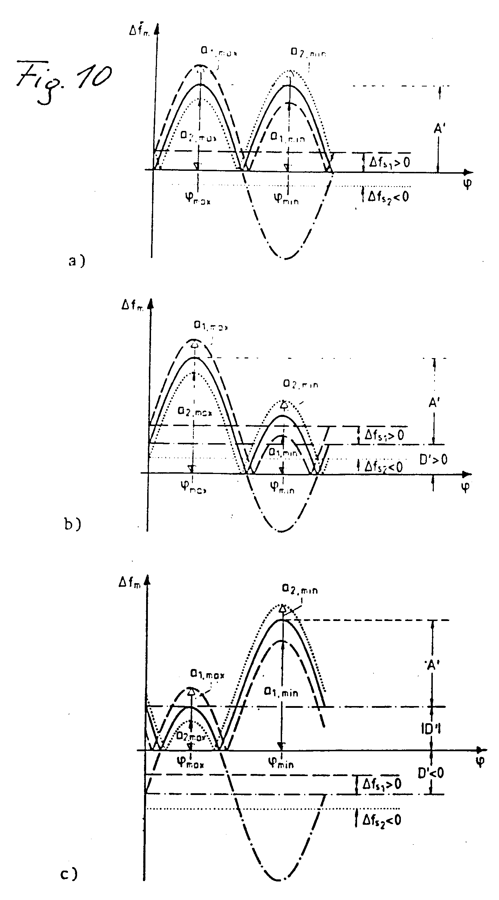

Bei vielen bekannten Windmeßsystemen ist, wie in Fig.9 gezeigt, der Sendestrahl für einen konischen Scan über einen exzentrisch umlaufenden Spiegel SP tangential zur Spiegelbewegung auf das Meßvolumen gerichtet. Ferner sind in Fig.9 eingetragen die Einfallsrichtung $\hat{k}$ des Lichtstrahls, die Ausfallsrichtung $\hat{k}'$ des Lichtstrahls, $\hat{k}_\perp$ und $\hat{k}_\parallel$ die beiden Komponenten von $\hat{k}'$, der Tangentenvektor $\hat{t}$ der Kreisbahn, der Normalenvektor $\hat{n}$ zur Oberfläche des Spiegels SP, $\hat{n}_\parallel$ die Komponente von $\hat{n}$ in der Drehebene, der Elevationswinkel $\theta$, der Azimutwinkel $\varphi$, der Abstand $r_s$ der exzentrisch umlaufenden Spiegels SP vom Mittelpunkt M der Anordnung sowie x,y und z als die drei senkrecht aufeinanderstehenden Achsrichtungen.

Ein in Richtung $\hat{k}$ einfallender Strahl verläuft senkrecht zur Bewegungsrichtung des Spiegels SP und erfährt daher keine Dopplerverschiebung, da $\hat{k} . \vec{v}_s := O$ ist. Der unter einem Elevationswinkel $\theta$ vom Spiegel SP in Richtung $\hat{k}'$ emittierte Strahl wird um eine Frequenzverschiebung $\Delta f_{s,l}$, nämlich

$$\Delta f_{s,l} = f_O . \frac{v}{c} . \cos\theta \quad (30a)$$

dopplerverschoben, ebenso der zurücklaufende Signalstrahl.

Die gesamte Frequenzverschiebung $\Delta f_s$ aufgrund der Rotation des Spiegels SP beträgt demzufolge:

$$\Delta f_s = 2f_O . \frac{v}{c} . \cos\theta \quad (30b)$$

Das Vorzeichen für $\Delta f_s$ ist dann durch die Rotationsrichtung des Spiegels SP festgelegt, wobei gilt:

$\Delta f_s > O$ bei einer Vorwärtsbewegung ($\hat{k}' . \vec{v}_s > O$)

$\Delta f_s < O$ bei einer Rückwärtsbewegung ($\hat{k}' . \vec{v}_s < O$).

Für die beobachtete Frequenzverschiebung $\Delta f_m(\varphi)$ mit einem konischen Scan (siehe hierzu Fig.1 und 2) ergibt sich nach Gl.(5)

$$\Delta f_m(\varphi) = |\Delta f_D + \Delta f_s| = |A' . \sin\varphi + D' + \Delta f_s|$$

Die funktionale Abhängigkeit der Frequenzverschiebung vom Azimutwinkel $\varphi$ wird durch den Betrag einer zweimal verschobenen Sinusfunktion beschrieben. Die erste Verschiebung D' resultiert aus dem Beitrag der vertikalen Windkomponente, während die zweite Verschiebung $\Delta f_s$ die Dopplerverschiebung durch den umlaufenden Spiegel SP ist. Der Einfluß der Spiegelrotation auf die Meßkurven ist in den Fig.10a bis 10c für die folgenden Fälle gezeigt:

Fig.10a) D' = O (kein Vertikalwind)

Fig.10b) D' > O (Vertikalwind nach unten)

Fig.10c) D' < O (Vertikalwind nach oben)

Hierbei geben in den Fig.10a bis 10c die durchgezogenen Linien jeweils die Meßkurven ohne eine Spiegelbewegung entsprechend Fig.3a bis 3c, die gestrichelt wiedergegebenen Kurven die Meßkurven für $\Delta f_s > O$ (eine Spiegelbewegung in Vorwärtsrichtung) und die punktiert wiedergegebenen Kurven jeweils die Meßkurven für $\Delta f_s < O$ (eine Spiegelbewegung in Rückwärtsrichtung) wieder.

Das Vorzeichen des Windvektors ergibt sich dann aus der Veränderung der gemessenen Frequenzverschiebung bei einer Bewegungsumkehr des Spiegels SP. Besonders einfach ist dies bei den beiden Maximalwerten der Frequenzverschiebung für $\varphi = \varphi_{max}$ und $\varphi = \varphi_{min}$ zu erkennen. Als Windrichtung im üblichen Sinn ist demnach der Azimutwinkel $\varphi$ desjenigen Maximums zu verstehen, dessen Amplitude, d.h. dessen Frequenz-

verschiebung $\Delta f_m$, bei der Bewegungsumkehr von vorwärts nach rückwärts zunimmt. In den Fig.10a bis 10c ist dies jeweils der Azimutwinkel $\varphi = \varphi_{min}$.

Bei einem zum Überprüfen des erfindungsgemäßen Verfahrens verwendeten Laser-Doppler-Anemometer kann die Komponente $V_{LOS}$ der Windgeschwindigkeit in der Beobachtungsrichtung im Bereich von 0,5 bis 15 m/s mit einer Genauigkeit von ca. 0,2 m/s bestimmt werden. Eine meßbare zusätzliche Dopplerverschiebung muß demnach durch eine Signalbewegung mit einer Geschwindigkeit $v_s > 0,2$ m/s erzeugt werden.

Die Änderung der gemessenen Frequenz in Abhängigkeit von der Hin- und Herbewegung eines Retroreflektors, die bei niedrigen Amplituden auch als Vibrationsbewegung bezeichnet werden kann, wurde bei einer Verwendung der Anordnung nach Fig.8 und einer Anordnung der Vorrichtung im Referenzstrahl deutlich beobachtet. Der Retroreflektor RR wurde hierbei mittels eines exzentrischen Antriebs bei einer Amplitude von 1,5mm und mit einer Frequenz von 10 bis 100 Hz in eine Vibrationsbewegung versetzt.

Bei einem konischen (Sektor-)Scan über vier Halbkreise, nämlich

1. $\varphi = 0°.....180°$
2. $\varphi = 180°.....0°$
3. $\varphi = 0°.....180°$
4. $\varphi = 180°.....0°$

wurde die Bewegungsrichtung des Spiegels geändert, wobei die Geschwindigkeit $v_s \approx 0,3$ m/s für einen Elevationswinkel $\theta \approx 20°$ betrug. Die Auswertung ergab, daß die Frequenzverschiebung im Maximum der Meßkurven für die Fälle 2. und 3. (einer Bewegung in Vorwärtsrichtung) deutlich größer ist als bei den Meßkurven für die Fälle 1. und 3., d.h. für eine Rückwärtsbewegung. Hierbei entsprach der Frequenzunterschied etwa der doppelten Spiegelgeschwindigkeit.

Die durchgeführten Untersuchungen haben somit eindeutig ergeben, daß sich die beiden vorstehend im einzelnen beschriebenen Vorrichtungen zur Durchführung des erfindungsgemäßen Verfahrens zur Windfernmessung einsetzen lassen, da sich mit ihnen zweifelsfrei das Vorzeichen der Windrichtung anhand der in der gleichen Richtung verlaufenden Teilchenströmung bestimmen und feststellen läßt.

## Patentansprüche

1. Verfahren zur Bestimmung des Vorzeichens der Richtung einer Teilchenströmung unter Anwendung eines Heterodyn-Laser-Doppler-Verfahrens zur Geschwindigkeitsbestimmung, bei welchem in einer Interferometeranordnung die Strahlung einer Laserquelle (L) mittels einer als Sendeoptik verwendeten optischen Anordnung (O) auf ein Meßvolumen gerichtet wird, über dieselbe als Empfangsoptik verwendete optische Anordnung (O) durch Überlagerungsempfang ein Frequenzunterschied ($\Delta f_D$) gemessen wird zwischen der ausgesandten Laserstrahlung und der in die als Empfangsoptik verwendete, optische Anordnung (O) zurückfallenden Laserstrahlung, welch letztere infolge von Streuung an sich in der Teilchenströmung mit derselben Geschwindigkeit mitbewegenden Partikeln und infolge des Dopplereffekts frequenzverschoben ist, und der Laserstrahlung eine zusätzliche Frequenzverschiebung ($\Delta f_s$) aufgeprägt wird, dadurch **gekennzeichnet**, daß

   a. die zusätzlich aufgeprägte Frequenzverschiebung ($\Delta f_s(t)$) zeitlich veränderlich ist;
   b. die zusätzlich aufgeprägte Frequenzverschiebung ($\Delta f_s$) zu jedem Meßzeitpunkt vom Betrag her kleiner ist als die durch die Teilchenbewegung hervorgerufene Dopplerverschiebung ($\Delta f_D$);
   c. der Frequenzunterschied ($\Delta f_m$) zwischen der ausgesandten und der zurückfallenden Laserstrahlung an mindestens zwei Zeitpunkten ($t_1$, $t_2$) gemessen wird, an welchen die zusätzlich aufgeprägten Frequenzverschiebungen ($\Delta f_s$) verschiedene Größen aufweisen;
   d. die zusätzliche Frequenzverschiebung der Laserstrahlung alternativ in genau festgelegten Bereichen von Strahlungsverläufen (R; Se; Si; Se/Si) aufgeprägt wird, und
   e. durch Vergleich von bei der Überlagerung von rückgestreutem, empfangenem Laserstrahl (Si) und einem Laser-Referenzstrahl (R) auf einem Strahlungsdetektor entstehenden Frequenzen ($\Delta f_m^{(t)}$) das Vorzeichen der Richtung der Teilchenströmung bestimmt wird.

2. Verfahren nach Anspruch 1, dadurch **gekennzeichnet**, daß die zusätzliche Dopplerverschiebung einem von der Laserstrahlung abgezweigten Referenzstrahl (R) aufgeprägt wird.

3. Verfahren nach Anspruch 1, dadurch **gekennzeichnet**, daß die zusätzliche Dopplerverschiebung einem von der Laserstrahlung abgezweigten Sendestrahl (Se) aufgeprägt wird.

4. Verfahren nach Anspruch 1, dadurch **gekennzeichnet**, daß die zusätzliche Dopplerverschiebung dem vom Meßvolumen rückgestreuten Laserstrahl (Signalstrahl Si) aufgeprägt wird.

5. Verfahren nach Anspruch 1, dadurch **gekennzeichnet**, daß die zusätzliche Dopplerverschiebung den in der optischen Anordnung (O) in entgegengesetzter Richtung verlaufenden Sendestrahl (Se) und Signalstrahl (Si) aufgeprägt wird.

6. Verfahren nach Anspruch 1, dadurch **gekennzeichnet**, daß durch Vergleich von Vorzeichenverschiebungen die Richtung der Teilchenströmung ermittelt wird.

7. Verfahren nach den Ansprüchen 1 bis 6, dadurch **gekennzeichnet**, daß die Größe der zusätzlich aufgeprägten Dopplerverschiebung durch die Wahl der Geschwindigkeit einer Spiegelbewegung im Referenz-, Sende-, Signal- oder im Sende- und Signalstrahl kleiner festgelegt wird als die durch die Teilchenströmung erzeugte Dopplerverschiebung.

8. Verfahren nach einem der Ansprüche 1 bis 7, dadurch **gekennzeichnet**, daß die Messung des Frequenzunterschieds zwischen dem gestreuten und dem ungestreuten Laserstrahl an einem ersten Zeitpunkt erfolgt, an welchem der Spiegel stillsteht, d.h. die Geschwindigkeit O hat, und an einem zweiten Zeitpunkt erfolgt, an welchem sich der Spiegel bewegt.

9. Verfahren nach einem der Ansprüche 1 bis 7, dadurch **gekennzeichnet**, daß die Messung des Frequenzunterschieds zwischen dem gestreuten und dem ungestreuten Laserstrahl an einem ersten Zeitpunkt ($t_1$) erfolgt, an welchem sich der Spiegel mit einer definierten Geschwindigkeit ($v_1$) bewegt, und an einem zweiten Zeitpunkt ($t_2$) erfolgt, an welchem sich der Spiegel mit gleichem Geschwindigkeitsbetrag in der entgegengesetzten Richtung bewegt.

10. Verfahren nach einem der Ansprüche 1 bis 7, dadurch **gekennzeichnet**, daß die Messung des Frequenzunterschieds zwischen dem gestreuten und dem ungestreuten Laserstrahl an einem ersten Zeitpunkt ($t_1$) erfolgt, an welchem sich der Spiegel mit einer definierten Geschwindigkeit ($v_1$) bewegt, und an einem zweiten Zeitpunkt erfolgt, an welchem er sich mit einer von der definierten Geschwindigkeit ($v_1$) verschie-denen Geschwindigkeit ($v_2$) bewegt.

11. Verwendung einer Interferometer-Anordnung, mit einer Laserquelle und einer als Sende- und Empfangsoptik dienenden optischen Anordnung (O), welche Umlenkspiegel ($M_1$ bis $M_5$), Strahlteiler ($BS_1$, $BS_2$), ein Brewster-Fenster (BW), $\lambda/4$- und $\lambda/2$-Phasenschieberplättchen sowie einen mit nach Betrag und/oder Richtung verschiedenen Geschwindigkeiten rotierbaren, weiteren Spiegel (SP) enthält, wobei zur Erzielung einer zusätzlich aufgeprägten Doppler-Verschiebung der weitere Spiegel (SP) um eine Drehachse (A) exzentrisch so in Rotation versetzbar ist, daß der Laserstrahl in der Tangentialebene des Rotationskreises des weiteren Spiegels (SP) ausgesandt wird,
zur Durchführung des Verfahrens nach einem der Ansprüche 1 bis 10.

## Claims

1. A method for determining the sign of the direction of a particle stream by use of a heterodyne-laser-Doppler method to determine the velocity, in which in an interferometer device the radiation of a laser source (L) is directed to a volume to be measured by means of an optical arrangement (O) used as optical emitter and in which, by use of the same optical arrangement (O) used as optical receiver, frequency difference ($\Delta f_D$) is measured by means of heterodyne reception between the emitted laser radiation and the laser radiation returning into the optical arrangement (O) used as an optical receiver, the latter having been frequency-shifted as a result of scattering caused by particles moving in the particle stream with the same speed and because of the Doppler effect and where an additional frequency shift ($\Delta f_s$) is impressed on the laser radiation
**characterized** in that
a. temporally changing the additionally impressed frequency shift ($\Delta f_s(t)$);
b. the additionally impressed frequency shift ($\Delta f_s(t)$) is of an amount smaller than the frequency shift ($\Delta f_D$) caused by the particle movement at any measuring point in time;
c. measuring the frequency difference ($\Delta f_m$) between the emitted and returninglaser radiation at at least two points in time ($t_1$, $t_2$), where the additionally impressed frequency shift ($\Delta f_s$) have different values;
d. alternately impressing the additional frequency shift of the laser radiation in exactly defined areas of the paths of radiation (R; $S_e$; $S_i$ ;$S_e$/$S_i$), and

e. determining by a comparison of frequencies appearing on a radiation detector during superimposition of the back-scattered, received laser radiation ($S_i$) and of a laser reference radiation (R) the sign of the direction of the particle stream.

2. A method in accordance with claim 1,
**characterized** by impressing the additionally impressed frequency shift on a reference radiation (R) split of the laser radiation.

3. A method in accordance with claim 1,
**characterized** by impressing the additionally impressed frequency shift on an emitter radiation ($S_e$) split off the laser radiation.

4. A method in accordance with claim 1,
**characterized** by impressing additionally impressed frequency change on a laser radiation (signal radiation $S_i$) scattered back by the measuring volume.

5. A method in accordance with claim 1,
**characterized** by impressing additionally impressed frequency shift on the emitter radiation ($S_e$) and the signal radiation ($S_i$) flowing in opposite direction in the optical arrangement (O).

6. A method in accordance with claim 1,
**characterized** by determining the direction of the particle stream by comparing the sign shifts.

7. A method according to claims 1 to 6,
**characterized** in that by the choice of the velocity of a mirror movement in the reference, transmitted or signal beam or in the transmitted and signal beam the magnitude ot the additionally impressed Doppler shift is made smaller than the Doppler shift caused by the particle stream.

8. A method according to any one of claims 1 to 7,
**characterized** in that the measurement of the frequency difference between the scattered and the unscattered laser beam takes place at a first point in time at which the mirror is stationary, i.e. has the velocity O, and at a second point in time at which the mirror is moving.

9. A method according to any one of claims 1 to 7,
**characterized** in that the measurement of the frequency difference between the scattered and the unscattered laser beam takes place at a first point ($t_1$) in time at which the mirror moves with a defined velocity ($v_1$) and at a second point in time ($t_2$) at which the mirror moves with the same absolute velocity in the opposite direction.

10. A method according to any one of claims 1 to 7,
**characterized** in that the measurement of the frequency difference between the scattered and the unscattered laser beam takes place at a first point ($t_1$) in time at which the mirror moves with a defined velocity ($v_1$) and a second point in time at which it moves with a velocity ($v_2$) different from the defined velocity ($v_1$).

11. Use of an interferometer arrangement comprising a laser source and an arrangement (O) which serves as transmitting and receiving optical system and which includes deflection mirrors ($M_1$ to $M_5$), beam splitters ($BS_1$, $BS_2$), a Brewster window (BW), $\lambda$/4 and $\lambda$/2 phase shift plates, and a further mirror (SP) rotatable with velocities different in amount and/or direction, and to obtain an additionally impressed Doppler shift the further mirror (SP) is eccentrically rotatable about an axis (A) of rotation in such a manner that the laser beam is transmitted in the tangential plane of the rotation circle of the further mirror (SP), for carrying out the method according to any one of claims 1 to 10.

## Revendications

1. Procédé pour déterminer le signe de la direction d'un écoulement de particules en utilisant un procédé Doppler à laser hétérodyne pour déterminer la vitesse, dans lequel le rayonnement d'une source laser (L) est dirigé dans un agencement d'interféromètre au moyen d'un agencement optique (O) utilisé comme optique émettrice sur un volume à mesurer, une différence de fréquence ($\Delta$fD) étant mesurée dans le même agencement optique (O) utilisé comme optique de réception par réception en superposition entre le rayonnement laser émis et le rayonnement laser revenant dans l'agencement optique (O) qui est utilisé comme optique de réception, ce rayonnement laser étant décalé en fréquence par suite de la dispersion des particules entraînées à la même vitesse dans l'écoulement de particules et en raison de l'effet Doppler, et en appliquant au rayonnement laser un décalage de fréquence additionnel ($\Delta f_s$), caractérisé en ce que

a. le décalage de fréquence ($\Delta f_s(t)$) appliqué additionnellement peut être modifié dans le temps;

b. le décalage de fréquence appliqué additionnellement ($\Delta f_s$) est plus faible à chaque point de mesure dans le temps que la quantité du déplacement Doppler provoqué par le mouvement des particules ($\Delta f_D$);

c. la différence de fréquence ($\Delta f_m$) entre le rayonnement laser émis et le rayonnement laser de retour est mesuré en au moins deux points dans le temps ($t_1$, $t_2$) pour lesquels les décalages de fréquence appliqués additionnellement ($\Delta f_s$) présentent des valeurs différentes;

d. le décalage de fréquence additionnel du rayonnement laser est appliqué alternativement dans des régions déterminées avec précision du parcours de rayonnement (R; Se; Si; Se/Si), et

e. le signe de la direction de l'écoulement des particules est déterminé par une comparaison entre les fréquences ($\Delta f_m(t)$) provenant de la superposition d'un rayon laser (Si) rétrodiffusé et reçu et d'un rayon laser de référence (R) sur un détecteur de rayonnement.

2. Procédé selon la revendication 1, caractérisé en ce que le déplacement Doppler additionnel est appliqué à un rayon de référence (R) partant en dérivation du rayonnement laser.

3. Procédé selon la revendication 1, caractérisé en ce que le déplacement Doppler additionnel est appliqué à un rayon émis (Se) partant en dérivation du rayonnement laser.

4. Procédé selon la revendication 1, caractérisé en ce que le déplacement laser additionnel est appliqué au rayon laser (rayon signal Si) qui est rétrodiffusé par le volume soumis à la mesure.

5. Procédé selon la revendication 1, caractérisé en ce que le déplacement Doppler additionnel est appliqué au rayon émis (Se) et au rayon signal (Si) qui passent en sens contraire dans l'agencement optique (O).

6. Procédé selon la revendication 1, caractérisé en ce que la direction de l'écoulement des particules est déterminé par une comparaison entre les déplacements de signe.

7. Procédé selon l'une quelconque des revendications 1 à 6, caractérisé en ce que la quantité de déplacement Doppler appliquée additionnellement au rayon de référence, au rayon émis ou au rayon signal, ou au rayon émis et au rayon signal, est fixée à un niveau plus faible que le déplacement Doppler produit par l'écoulement de particules, par le choix de la vitesse d'un mouvement du miroir.

8. Procédé selon l'une quelconque des revendications 1 à 7, caractérisé en ce que la mesure de la différence de fréquence entre le rayon laser dispersé et le rayon laser non dispersé s'effectue à un premier moment dans le temps dans lequel le miroir est immobile, c'est-à-dire dont la vitesse est nulle, et à un second moment dans le temps dans lequel le miroir se déplace.

9. Procédé selon l'une quelconque des revendications 1 à 7, caractérisé en ce que la mesure de la différence de fréquence entre le rayon laser dispersé et le rayon laser non dispersé s'effectue à un premier moment dans le temps ($t_1$) dans lequel le miroir se déplace à une vitesse définie ($v_1$) et à un second moment dans le temps ($t_2$) dans lequel le miroir se déplace de la même quantité de vitesse dans la direction opposée.

10. Procédé selon l'une quelconque des revendications 1 à 7, caractérisé en ce que la mesure de la différence de fréquence entre le rayon laser dispersé et le rayon laser non dispersé s'effectue à un premier moment dans le temps ($t_1$) dans lequel le miroir se déplace à une vitesse définie ($v_1$) et à un second moment dans le temps dans lequel il se déplace à une vitesse ($v_2$) qui est différente de la vitesse définie ($v_1$).

11. Utilisation d'un agencement d'interféromètre pour la mise en oeuvre du procédé selon l'une quelconque des revendications 1 à 10, comprenant une source laser et une optique d'émission et de réception servant d'agencement optique (O), qui comprend des miroirs déflecteurs ($M_1$ à $M_5$), des séparateurs de faisceau ($BS_1$, $BS_2$), une fenêtre de Brewster (BW), des plaquettes de déphasage $\lambda/4$ et $\lambda/2$ ainsi qu'un autre miroir (SP) pouvant tourner à des vitesses différentes en fonction de la quantité et/ou de la direction, lequel autre miroir (SP) peut être déplacé en rotation excentriquement autour d'un axe de rotation (A) pour déterminer un déplacement Doppler additionnel, de manière que le rayon laser soit envoyé dans le plan tangent au cercle de rotation de l'autre miroir (SP).

EP 0 355 300 B1

Fig. 1

$V_{LOS}(\varphi)$

$\vec{w}$

r

$\varphi$

R

H

θ

Fig. 2

$V_{LOS}$

a

b

c

$\varphi_{min}$

A

$\varphi_{max}$

D > 0

$\varphi$

D < 0

15

_Fig. 3_

a)

b)

c)

Fig. 4

Fig. 5

Fig. 6

Fig. 7

Fig. 9

Fig. 8

EP 0 355 300 B1

Fig. 10

a)

b)

c)